# EUROPÄISCHE PATENTSCHRIFT

(11) **EP 3 619 250 B1**
(45) Veröffentlichungstag und Bekanntmachung des Hinweises auf die Patenterteilung: **21.12.2022**
(21) Anmeldenummer: 18719202.6
(22) Anmeldetag: 27.04.2018
(51) Int. Cl.: C08G 18/48, C08G 18/32, C08G 18/42, C08G 18/54, C08G 18/38, C08G 18/30, C08G 18/22, C08G 18/18, C08G 18/20, C08G 18/76, C08G 18/66, C08K 5/00, C08K 5/521, C08G 101/00, C08K 3/32

(54) **POLYURETHANHARTSCHAUMSTOFFE MIT VERBESSERTEM BRANDVERHALTEN**
RIGID POLYURETHANE FOAMS HAVING IMPROVED FIRE PERFORMANCE
MOUSSE EN RÉSINE DE POLYURÉTHANE AYANT UN COMPORTEMENT AU FEU AMÉLIORÉ

(30) Priorität: 05.05.2017 EP 17169743
(43) Veröffentlichungstag der Anmeldung: 11.03.2020
(73) Patentinhaber: BASF SE, 67056 Ludwigshafen am Rhein (DE)
(72) Erfinder: KALUSCHKE, Tobias, 49448 Lemfoerde (DE); JACOBMEIER, Olaf, 49448 Lemfoerde (DE); RENNER, Christian, 49448 Lemfoerde (DE)
(74) Vertreter: BASF IP Association
(86) Internationale Anmeldenummer: PCT/EP2018/060833
(87) Internationale Veröffentlichungsnummer: WO 2018/202567

(56) Entgegenhaltungen:
- DE-A1- 19 853 025

## Beschreibung

Die vorliegende Erfindung betrifft ein Verfahren zur Herstellung von Polyurethan-Hartschaumstoffen oder Polyisocyanurat-Hartschaumstoffen, bei dem man Polyisocyanate (A) mit Verbindungen mit mindestens zwei mit Isocyanatgruppen reaktiven Wasserstoffatomen (B), Flammschutzmittel (C), Treibmittel (D), Katalysator (E) und silikonhaltiger Schaumstabilisator (F) zu einer Reaktionsmischung vermischt und zum Polyurethanhartschaumstoff aushärtet, wobei die Komponente (B) mindestens ein Polyetherpolyol (b1), hergestellt durch Alkoxylierung von Ethylendiamin, Toluylendiamin oder Mischungen davon, mindestens ein aromatisches Mannichkondensat (b2), das alkoxyliert sein kann, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest oder für Wasserstoff steht, einem oder mehreren Aldehyden und/oder Ketonen und einem oder mehreren primären oder sekundären Aminen, sowie mindestens ein aromatisches Polyesterpolyol (b3) und gegebenenfalls Kettenverlängerungs- und/oder Vernetzungsmittel enthält, und wobei als Schaumstabilisator (F) ein silikonhaltiger Schaumstabilisator verwendet wird, bei dem eine Mischung, bestehend aus 80 Gew.-% Schaumstabilisator (F) und 20 Gew.-% Wasser sowie 60 Gew.-% Schaumstabilisator (F) und 40 Gew.-% Wasser, jeweils bezogen auf das Gesamtgewicht der Mischung nach dreitägiger Lagerung bei 20 °C eine fließfähige Mischung mit weniger als 8 nephelometrischen Trübungseinheiten bildet.

Weiter betrifft die vorliegende Erfindung einen Polyurethan-Hartschaumstoff, erhältlich nach einem solchen Verfahren.

Die Herstellung von Polyurethan-Hartschaumstoffen durch Umsetzung von Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Polyurethan-Hartschaumstoffe oder Polyisocyanurat-Hartschaumstoffe werden häufig als Dämmmaterial zur Wärmeisolation verwendet. Dabei werden die Schaumstoffe insbesondere als Verbundelemente mit einer Deckschicht eingesetzt.

Wesentliche Anforderungen an Polyurethan-Hartschaumstoffe sind dabei eine niedrige Wärmeleitfähigkeit, eine ausreichende Haftung des Schaums an den Deckschichten, gute mechanische Eigenschaften und ein hohes flammwidriges Verhalten.

Das gute flammwidrige Verhalten ist insbesondere bei Anwendungen im Baubereich, besonders bei Verbundelementen aus metallischen Deckschichten und einem Kern aus Polyurethan- oder Polyisocyanurat-Hartschaum von großer Bedeutung. Unter einem Polyisocyanurat-Hartschaum wird üblicherweise ein Schaumstoff verstanden, der neben Urethan- auch Isocyanuratgruppen enthält. Im Rahmen der Erfindung soll der Begriff Polyurethan-Hartschaumstoff auch Polyisocyanurat-Hartschaumstoff einschließen, wobei zur Herstellung von Polyisocyanuratschaumstoffen bei Isocyanatkennzahlen von größer 180 gearbeitet wird.

Ein großes Problem der heute nach dem Stand der Technik bekannten Polyisocyanurat-Hartschaumstoffe ist eine unzureichende Schaumhaftung an den metallischen Deckschichten. Um diesen Mangel zu beheben, wird üblicherweise zwischen der Deckschicht und dem Schaumstoff ein Haftvermittler aufgebracht, wie beispielsweise in WO 99/00559 beschrieben. Außerdem sind bei der Verarbeitung hohe Formtemperaturen von > 60 °C erforderlich um eine ausreichende Trimerisierung der Polyisocyanatkomponente zu gewährleisten, was zu einer höheren Vernetzungsdichte und somit zu besseren Temperaturstabilitäten, Druckfestigkeiten und Flammfestigkeiten im Schaum führt.

Polyurethan-Hartschaumstoffe zeigen im Vergleich zu Polyisocyanurat-Hartschaumstoffen meist eine deutlich bessere Schaumhaftung an den metallischen Deckschichten und lassen sich bei deutlich geringeren Verarbeitungstemperaturen umsetzen. Um die geforderte Brandfestigkeit zu erhalten wird jedoch in der Regel ein sehr hoher Anteil an flüssigen halogenhaltigen Flammschutzmitteln benötigt.

DE 19528537 A1 beschreibt besipielsweise ein Verfahren zur Herstellung von Polyurethan-Hartschaumstoffen bei deren Herstellung große Mengen an Chlor-, Brom- und Phosphorverbindungen in der Polyolkomponente eingesetzt werden.

Aus ökotoxikologischen Gründen und aufgrund verbesserter Brandnebenerscheinungen ist es jedoch wünschenswert den Einsatz halogenierter Flammschutzmittel, insbesondere bromierter Flammschutzmittel in der Polyolkomponente möglichst gering zu halten. Ein reiner Einsatz von bei Raumtemperatur flüssigen, halogenfreien Flammschutzmitteln in Polyurethan-Hartschaumstoffen auf Polyetherpolyolbasis ermöglicht es insbesondere in Verbindung mit gängigen brennbaren physikalischen Treibmitteln, wie z.B. n-Pentan oder Cyclopentan entweder nicht die notwendigen Flammschutzstandards zu erreichen oder erfordert starke Einschränkungen in der Mechanik oder der Verarbeitung des Hartschaums. So treten beispielsweise bei der Verwendung von festen halogenfreien Flammschutzmitteln wie Melamin, Ammoniumsulfat, Blähgraphit und Ammoniumpolyphosphat dosier- und verarbeitungstechnische Probleme auf und die mechanischen Eigenschaften des Hartschaums werden bei gleichen Dichten deutlich reduziert (siehe auch EP 0665251 A2).

DE 10337787 A1 beschreibt die Verwendung von silikonfreien Schaumstabilisatoren in Kombination mit amingestarteten Polyetherpolyolen als Möglichkeit Flammschutzmittel einzusparen. Die Verwendung von silikonfreien Schaumstabilisatoren führt jedoch im Gegensatz zu silikon-haltigen Schaumstabilisatoren bekanntermaßen zu einer schlechten Schaumstabilisierung und somit zu grobzelligeren Hartschaumstoffen mit minderwertigen Schaumoberflächen und Gaseinschlüssen unter den Deckschichten, was die optische Güte der damit hergestellten Bauteile negativ beeinflusst.

DE19853025 beschreibt ein Verfahren zur Herstellung von halogenfrei flammgeschützten Hartschaumstoffen auf Isocyanatbasis durch Umsetzung von organischen und/oder modifizierten organischen Polyisocyanaten mit einer den Flammschutz bewirkenden Mischung aus Polyolen und Flammschutzmitteln in Gegenwart von weiteren an sich bekannten Hilfs- und Zusatzstoffen €, wobei als Flammschutz erzeugende Mischung aus Polyolen und Flammschutzmitteln (b) eine Kombination aus mindestens einem aromatischen Polyetherpolyol, mindestens einem Polyesterpolyol, mindestens einem gegenüber Isocyanatgruppen reaktiven Phosphonat und mindestens einem gegenüber Isocyanatgruppen nicht reaktiven Phosphonsäure- oder Phosphorsäureester eingesetzt wird. In Beispiel 4 wird als Schaumstabilisator Dabco DC 193 eingesetzt.

EP 936240 beschreibt ein Verfahren zur Herstellung von Polyurethanhartschaumstoffen, ausgehend von MDI und einer Polyhyydroxyverbindung auf Basis von Sorbit un Propylenoxid, wobei als Stabilisator Dabco DC 5103 eingesetzt wird.

WO 2011/131682 A1 beschreibt den Aufbau einer Polyolkomponente, enthaltend ein aromatisches Polyesterpolyol und ein Polyetherpolyol mit einer Funktionalität von 4 - 8 und einer Hydoxylzahl von 300 - 600 mg KOH/g. Das Umsetzen dieser Polyolkomponente bei mittleren Isocyanatkennzahlen im Bereich von 200 bei Verarbeitungstemperaturen zwischen 40 und 50 °C ermöglicht eine deutliche Einsparung an Flammschutzmittel. Allerdings weisen diese PUR/PIR Hybridsysteme ein deutlich schlechteres Aushärteverhalten im Vergleich zu den flammgeschützten bromhaltigen Polyurethan-Hartschaumstoffen auf, was bei der Herstellung von Verbundelementen zu einer Wellenbildung führen kann. Besonders die Verarbeitung dünner Sandwichelemente mit Dicken unter 60 mm führt aufgrund der niedrigen Wärmeentwicklung im Reaktionsgemisch häufig zu Problemen in Härtung und Flammfestigkeit des Hartschaums.

Aufgabe der vorliegenden Erfindung war es, das Eigenschaftsprofil aus den vorgenannten Eigenschaften zu verbessern, insbesondere sollten das Brandverhalten bei gleichem Flammschutzmittelgehalt verbessert bzw. der Gehalt an Flammschutzmittel verringert werden. Eine Aufgabe der Erfindung war es insbesondere, Reaktionsmischungen zur Herstellung von Polyurethan-Hartschumstoffen zu liefern, die bei geringen Formtemperaturen, beispielsweise kleiner als 55 °C, zu Polyurethan-Hartschaumstoffen verarbeitet werden können und gute Hafteigenschaften zu flexiblen oder starren Deckschichten aufweisen, ohne dass ein Haftvermittler verwendet werden muss. Insbesondere sollten Polyurethan-Hartschaumstoffe zur Verfügung gestellt werden, die bei einem reduzierten Gehalt an halogenhaltigen Flammschutzmitteln im Kleinbrennertest entsprechend EN-ISO 11925-2 Flammenhöhen unter 15 cm, vorzugsweise unter 14 cm und insbesondere von unter 13,5 cm erreichen. Weiterhin sollen die erfindungsgemäßen Polyurethan-Hartschaumstoff gute Druckfestigkeiten und Schaumoberflächen aufweisen. Die erfindungsgemäße Aufgabe wird gelöst durch ein Verfahren zur Herstellung von Polyurethan-Hartschaumstoffen, bei dem man Polyisocyanate (A) mit Verbindungen mit mindestens zwei mit Isocyanatgruppen reaktiven Wasserstoffatomen (B), Flammschutzmittel (C), Treibmittel (D) Katalysator (E) und silikonhaltiger Schaumstabilisator (F) zu einer Reaktionsmischung vermischt und zum Polyurethanhartschaumstoff aushärtet, wobei die Komponente (B) mindestens ein Polyetherpolyol (b1), hergestellt durch Alkoxylierung von Ethylendiamin, Toluylendiamin oder Mischungen davon, mindestens ein aromatisches Mannichkondensat (b2) das alkoxyliert sein kann, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest oder für Wasserstoff steht, einem oder mehreren Aldehyden und/oder Ketonen und einem oder mehreren primären oder sekundären Aminen, sowie mindestens ein aromatisches Polyesterpolyol (b3) und gegebenenfalls Kettenverlängerungs- und/oder Vernetzungsmittel enthält, und wobei als Schaumstabilisator (F) ein silikonhaltiger Schaumstabilisator verwendet wird, bei dem eine Mischung, bestehend aus 80 Gew.-% Schaumstabilisator (F) und 20 Gew.-% Wasser sowie 60 Gew.-% Schaumstabilisator (F) und 40 Gew.-% Wasser, jeweils bezogen auf das Gesamtgewicht der Mischung, nach dreitägiger Lagerung bei 20 °C eine fließfähige Mischung mit weniger als 8 nephelometrischen Trübungseinheiten bildet. Weiter wird die erfindungsgemäße Aufgabe gelöst durch einen Polyurethan-Hartschaumstoff, erhältlich nach einem erfindungsgemäßen Verfahren.

Im Rahmen der Erfindung wird unter Polyurethan-Hartschaumstoff ein geschäumtes Polyurethan, bevorzugt ein Schaumstoff gemäß DIN 7726, verstanden, der eine Druckfestigkeit nach DIN 53 421 / DIN EN ISO 604 von größer gleich 80 kPa, bevorzugt größer gleich 150 kPa, besonders bevorzugt größer gleich 180 kPa aufweist. Weiterhin verfügt der Polyurethan-Hartschaumstoff nach DIN ISO 4590 über eine Geschlossenzelligkeit von größer 50%, vorzugsweise größer 85% und besonders bevorzugt größer 90%.

Das Vorliegen einer fließfähigen Mischung des Schaumstabilisators (F) mit Wasser wird gemäß dem in den Beispielen beschriebenen Verfahren bestimmt. Die Trübungsmessung erfolgt gemäß DIN EN ISO 7027-1:2016 wie in den Beispielen beschrieben.

Als Polyisocyanate (A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpen-tamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate, häufig auch zusammen mit nicht umgesetzten Polyisocyanaten

Besonders bevorzugt enthalten die Polyisocyanate der Komponente (A) 2,2'-MDI oder 2,4'-MDI oder 4,4'-MDI (auch als monomeres Diphenylmethan oder MMDI bezeichnet) oder oligomeres MDI, das aus höherkernigen Homologen des MDI, welche mindestens 3 aromatische Kerne und eine Funktionalität von mindestens 3 aufweisen, besteht, oder Mischungen aus zwei oder drei der vor-genannten Diphenylmethandiisocyanate, oder Roh-MDI, welches bei der Herstellung von MDI anfällt, oder bevorzugt Mischungen aus mindestens einem Oligomer des MDI und mindestens einem der vorgenannten niedermolekularen MDI-Derivate 2,2'-MDI, 2,4'-MDI oder 4,4'-MDI (auch als polymeres MDI bezeichnet).Üblicherweise werden die Isomeren und Homologen des MDI durch Destillation von Roh-MDI erhalten.

Vorzugsweise enthält polymeres MDI neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenpolyisocyanat bezeichnet.

Die (mittlere) Funktionalität eines Polyisocyanates, welches polymeres MDI enthält, kann im Bereich von ungefähr 2,2 bis ungefähr 4 variieren, insbesondere von 2,4 bis 3,8 und insbesondere von 2,6 bis 3,0. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat^{®} M20 oder Lupranat^{®} M50 vertrieben.

Vorzugsweise enthält die Komponente (A) mindestens 70, besonders bevorzugt mindestens 90 und insbesondere 100 Gew.-%, bezogen auf das Gesamtgewicht der Komponente (A), ein oder mehrere Isocyanate, ausgewählt aus der Gruppe, bestehend aus 2,2'-MDI, 2,4'-MDI, 4,4'-MDI und Oligomeren des MDI. Dabei beträgt der Gehalt an oligomerem MDI vorzugsweise mindestens 20 Gew.-%, besonders bevorzugt größer 30 bis kleiner 80 Gew.-%, bezogen auf das Gesamtgewicht der Komponente (A).

Die Viskosität der eingesetzten Komponente (A) kann in einem weiten Bereich variieren. Vorzugsweise weist die Komponente (A) eine Viskosität von 100 bis 3000 mPa*s, besonders bevorzugt von 100 bis 1000 mPa*s, insbesondere bevorzugt von 100 bis 600 mPa*s, spezieller von 200 bis 600 mPa*s und im speziellen von 400 bis 600 mPa*s bei 25 °C, auf.

Erfindungsgemäß enthalten die Verbindungen mit mindestens zwei mit Isocyanatgruppen reaktiven Wasserstoffatomen (B) mindestens ein Polyetherpolyol (b1), hergestellt durch Alkoxylierung von Ethylendiamin, Toluylendiamin oder Mischungen davon, mindestens ein aromatisches Mannichkondensat (b2) das alkoxyliert sein kann, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest oder für Wasserstoff steht, einem oder mehreren Aldehyden und/oder Ketonen und einem oder mehreren primären oder sekundären Aminen, sowie mindestens ein aromatisches Polyesterpolyol (b3). Weiter kann die Komponente (B) Kettenverlängerungs- und/oder Vernetzungsmittel (b4) enthalten.

Vorzugsweise sind in der Komponente (B) neben den Komponenten (b1) bis (b4) weniger als 20 Gew.-%, besonders bevorzugt weniger als 10 Gew.-%, jeweils bezogen auf das Gesamtgewicht der Komponente (B), und insbesondere keine weiteren Verbindungen mit mindestens zwei mit Isocyanatgruppen reaktiven Wasserstoffatomen enthalten. Dabei beträgt die mittlere Funktionalität der Komponente (B) vorzugsweise 3,0 bis 6,0 und die Hydroxylzahl 350 bis 900 mg KOH/g,

In einer besonders vorteilhaften Ausführungsform besteht die Komponente (B) aus einem Gemisch aus 2 bis 60 Gew.-Teilen, insbesondere 5 bis 40 Gew.-Teilen, eines oder mehrerer Polyetheralkohole (b1), 10 bis 70 Gew.-Teilen, insbesondere 20 bis 60 Gew.-Teilen, eines aromatischen Mannichkondensats in alkoxylierter oder unalkoxylierter Form (b2), 5 bis 50 Gew.-Teilen, insbesondere 10 bis 35 Gew.-Teilen, eines aromatischen Polyesterpolyols (b3) und 0 bis 15 Gew.-Teilen Kettenverlängerer und/oder Vernetzungsmittel (b4).

Die erfindungsgemäß verwendete Komponente (B) hat besonders bevorzugt eine mittlere Hydroxylzahl von 300 bis 600 mg KOH/g, insbesondere 400 bis 550 mg KOH/g. Die Bestimmung der Hydroxylzahl erfolgt gemäß DIN 53240. Werden Mischungen aus Startermolekülen mit unterschiedlicher Funktionalität eingesetzt, können gebrochenzahlige Funktionalitäten erhalten werden. Einflüsse auf die Funktionalität, beispielsweise durch Nebenreaktionen, werden bei der nominalen Funktionalität nicht berücksichtigt.

Die Polyetherole (b1) werden nach bekannten Verfahren, beispielsweise durch anionische Polymerisation von Alkylenoxiden unter Zusatz mindestens eines Startermoleküls in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Auch aminische Alkoxylierungs-Katalysatoren, wie Dimethylethanolamin (DMEOA), Imidazol und Imidazolderivate können eingesetzt werden. Weiterhin können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,2-Propylenoxid, Ethylenoxid, 1,2- bzw. 2,3-Butylenoxid, jeweils alleine oder in Form von Mischungen eingesetzt. Vorzugsweise verwendet werden Ethylenoxid und/oder 1,2-Propylenoxid, im speziellen ausschließlich 1,2-Propylenoxid.

Startermoleküle zur Herstellung der Polyetherpolyole (b1) sind Ethylendiamin und/oder Toluylendiamin.

Die im Rahmen von Komponente (b1) eingesetzten Polyetherpolyole weisen vorzugsweise zahlenmittlere Molekulargewichte von 100 bis 1200, besonders bevorzugt von 150 bis 800 und insbesondere von 250 bis 600 auf. Die OH Zahl der Polyetherpolyole der Komponente (b1) beträgt vorzugsweise von 1200 bis 100, mehr bevorzugt von 1000 bis 200 und insbesondere von 800 bis 350 mg KOH/g.

Als ein aromatisches Mannichkondensat (b2), das alkoxyliert sein kann, wird ein Mannichkondensat eingesetzt, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest, beispielsweise einen Alkylrest, oder für Wasserstoff steht, einem oder mehreren Aldehyden und/oder Ketonen und einem oder mehreren primären oder sekundären Amine.

Beispiele für aromatische Verbindungen, die an einem aromatischen Ring mindestens eine Hydroxylgruppe und/oder mindestens eine -NHR - Gruppe trägt sind Phenol, ortho-, para-, meta-Kresol, Ethylphenol, Nonylphenol, Dodecylphenol, para-Phenylphenol, 2-Chlorphenol, 2,6-Dichlorphenol, 2 Bromphenol, 2-Brom-6-cyclohexylphenol, para-Nitrophenol, 3,5-Dimethylphenol, para-Isopropylphenol, β-Naphtol, Hydroxyanthrazen, substituierte s-Triazin, Verbindungen enthaltend mindestens eine Amino-Gruppe am Triazin-Ring wie z.B. Melamin, Ammelin, Ammelid, Guanamin und Benzoguanamin, sowie die verschiedenen Bisphenole einschließlich 2,2-Bis-(4-hydroxyphenyl)-propan (Bisphenol A). Bevorzugt sind Phenol, Monoalkylphenole mit 1 bis 10 Kohlenstoffatomen und Bisphenol A, besonders bevorzugte Verbindungen sind Bisphenol A und Nonylphenol.

Beispiele für die Aldehyde und/oder Ketone, die sich zur Herstellung des Mannichkondensats (b2) eignen, sind Formaldehyd, Acetaldehyd, Benzaldehyd, Cyclohexanon, Acetophenon, Indanon, Acetylnaphtalen, sowie 1- und 2-Tetralon, besonders bevorzugt verwendet wird Formaldehyd.

Beispiele für die primären oder sekundären Amine, die sich zur Herstellung des Mannichkondensats (b2) eignen, sind Monoethanolamin, Diethanolamin, Isopropanolamin, Diisopropanolamin, Hydroxyethylamin, Ethanolisopropanolamin, Ethanol-2-hydroxybutylamim, Isopropanol-2-hydroxybutylamin, Isopropanol-2-hydroxyhexylamin, Ethanol-2-hydroxyhexylamin, Bis-(2-hydroxypropyl)-amin, n-Hydroxyethylpiperazin, N-Hydroxybutylamin, N-Hydroxyethyl-2,5-dimethylpiperazin, besonders bevorzugt ist Diethanolamin.

Die im Rahmen von Komponente (b2) eingesetzten Mannichkondensate können auch alkoxyliert sein. Die Alkoxylierung erfolgt nach bekannten Verfahren, wie sie bereits bei der Herstellung der Komponente (b1) beschrieben wurden. Bevorzugte Alkylenoxide sind hier Ethylenoxid, 1,2-Propylenoxid, 1,3-Propylenoxid, 1,2- bzw. 2,3-Butylenoxid, Tetrahydrofuran und Styroloxid, vorzugsweise Ethylenoxid und 1,2-Propylenoxid, insbesondere 1,2-Propylenoxid. Die Alkylenoxide können einzeln, alternierend nacheinander oder als Mischungen verwendet werden.

Die im Rahmen von Komponente (b2) eingesetzten aromatischen Mannichkondensatpolyole weisen vorzugsweise eine Funktionalität von 2 bis 6 und besonders bevorzugt von 3 bis 5 auf. Die OH Zahl der aromatischen Mannichkondensatpolyole (b2) beträgt vorzugsweise von 200 bis 650 und besonders bevorzugt von 300 bis 550 mg KOH/g.

In einer bevorzugten Ausführungsform ist die Mannichbase aufgebaut aus den aromatischen Verbindungen p-Nonylphenol und/oder Phenol und/oder Bisphenol A, den sekundären Aminen Diethanolamin und/oder Diisopropanolamin und Formaldehyd. In einer besonders bevorzugten Ausführungsform ist die beschriebene Mannichbase alkoxyliert.

Erfindungsgemäß enthält Komponente (B) mindestens ein aromatisches Polyesterpolyol (b3). Geeignete Polyesterpolyole (b3) können vorzugsweise aus aromatischen Dicarbonsäuren, oder Gemischen aus aromatischen und aliphatischen Dicarbonsäuren, besonders bevorzugt ausschließlich aus aromatischen Dicarbonsäuren und mehrwertigen Alkoholen hergestellt werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Als aromatische Dicarbonsäuren bzw. als aromatische Dicarbonsäurederivate werden vorzugsweise Phthalsäure, Phthalsäureanhydrid, Terephthalsäure und/oder Isophthalsäure im Gemisch oder alleine verwendet, bevorzugt Verwendung finden Phthalsäure, Phthalsäureanhydrid und Terephthalsäure. Besonders bevorzugt ist die Verwendung von Terephthalsäure oder Dimethylterephthalat, im Speziellen Terephthalsäure. Aliphatische Dicarbonsäuren können mit aromatischen Dicarbonsäuren in untergeordneter Rolle im Gemisch verwendet werden. Beispiele für aliphatische Dicarbonsäuren sind Bernsteinsäure, Glutarsäure, Adipinsäure, Korksäure, Azelainsäure, Sebazinsäure, Decandicarbonsäure, Maleinsäure und Fumarsäure.

Beispiele für mehrwertige Alkohole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol, bzw. deren Alkoxylate. Vorzugsweise verwendet werden Ethylenglycol, Diethylenglykol, Propylenglycol, Glycerin, Trimethylolpropan, bzw. deren Alkoxylate oder Mischungen aus mindestens zwei der genannten Polyole.

In einer speziellen Ausführungsform der Erfindung wird als mehrwertiger Alkohol auch ein Polyetherpolyol verwendet, welches ein Umsetzungsprodukt von Glycerin und oder Trimethylolpropan mit Ethylenoxid und/ oder Propylenoxid, bevorzugt mit Ethylenoxid ist, wobei die OH-Zahl des Polyetherpolyols im Bereich zwischen 500 bis 750 mg KOH/g liegt. Hierdurch ergibt sich eine verbesserte Lagerstabilität der Komponente (b3).

Zur Herstellung der Polyesterpolyole (b3) kommen neben den aromatischen Dicarbonsäuren oder deren Derivate und der mehrwertigen Alkohole auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzes Kummelöl, Kurbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxylmodifizierte Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, o,- und y-Linolensäure, Stearidonsäure, Arachidonsäure, Timnodonsäure, Clupanodonsäure und Cervonsäure.

In einer bevorzugten Ausführungsform der vorliegenden Erfindung ist die Fettsäure oder das Fettsäurederivat Ölsäure, Biodiesel, Sojaöl, Rapsöl oder Talg, besonders bevorzugt ist Ölsäure oder Biodiesel und im speziellen Ölsäure. Die Fettsäure oder das Fettsäurederivat verbessert unter anderem die Treibmittellöslichkeit bei der Herstellung von Polyurethanhartschaumstoffen.

Zur Herstellung der Polyesterpolyole (b3) können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole (b3) werden die organischen Polycarbonsäuren und/oder - derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Vorzugsweise weist das Polyesterpolyol (b3) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Die erhaltenen Polyesterpolyole (b3) weisen im Allgemeinen ein zahlenmittleres Molekulargewicht von 200 bis 2000 g/mol, vorzugsweise 300 bis 1000 g/mol und insbesondere 400 bis 700 g/mol auf. Die OH Zahl der Polyesterpolyole (b3) beträgt vorzugsweise 100 bis 800, besonders bevorzugt von 600 bis 150 und insbesondere von 400 bis 200 mg KOH/g.

Weiter kann die Komponente (B) Kettenverlängerungs- und/oder Vernetzungsmittel (b4) enthalten, beispielsweise zur Modifizierung der mechanischen Eigenschaften, z. B. der Härte. Als Kettenverlängerungs- und/oder Vernetzungsmittel verwendet werden Diole und/oder Triole sowie Aminoalkohole mit Molekulargewichten kleiner als 150 g/mol, vorzugsweise von 60 bis 130g/mol. In Betracht kommen beispielsweise aliphatische, cycloaliphatische und/oder araliphatische Diole mit 2 bis 8, vorzugsweise 2 bis 6 Kohlenstoffatomen, wie z. B. Ethylenglykol, 1,2-Propylenglycol, Diethylenglycol, Dipropylenglycol, 1,3-Propandiol, 1,4-Butandiol, 1,6-Hexandiol, o-, m-, p-Dihydroxycyclohexan, Bis-(2-hydroxy-ethyl)-hydrochinon. Ebenso in Betracht kommen aliphatische und cycloaliphatische Triole wie Glycerin, Trimethylolpropan und 1,2,4- und 1,3,5-Trihydroxycyclohexan.

Sofern zur Herstellung der Polyurethan-Hartschaumstoffe Kettenverlängerungsmittel, Vernetzungsmittel oder Mischungen davon Anwendung finden, werden diese zweckmäßigerweise in einer Menge von 0 bis 15 Gew.-%, vorzugsweise von 0 bis 5 Gew.-%, bezogen auf das Gesamtgewicht der Komponente (B) eingesetzt. Vorzugsweise enthält die Komponente (B) weniger als 2 Gew.-% und besonders bevorzugt weniger als 1 Gew.-% und insbesondere kein Kettenverlängerungs- und/oder Vernetzungsmittel (b4).

Als Flammschutzmittel (C) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)-phosphat, Tris-(2-chlorisopropyl)-phosphat (TCPP), Tris-(1,3-dichlorpropyl)-phosphat, Trikresylphosphat, 10 Tris-(2,3-dibrompropyl)-phosphat, Tetrakis-(2-chlorethyl)-ethylendiphosphat, Dimethylmethanphosphonat, Diethanolaminomethylphosphonsäurediethylester, sowie handelsübliche halogenhaltige Flammschutzpolyole. Als weitere Phosphate oder Phosphonate können Diethylethanphosphonat (DEEP), Triethylphosphat (TEP), Dimethyl-propylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin, sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugt werden Flammschutzmittel verwendet, die bei Raumtemperatur flüssig sind. Besonders bevorzugt sind TCPP, TEP, DEEP, DMPP, DPK, bromierte Ether und Tribromneopenthylalkohol, speziell TCPP, TEP und Tribromneopentylalkohol und insbesondere TCPP.

Im Allgemeinen beträgt der Anteil des Flammschutzmittels (C), 10 bis 55 Gew.-%, bevorzugt 20 bis 50 Gew.-%, besonders bevorzugt 25 bis 35 Gew.-%, bezogen auf die Summe der Komponenten (B) bis (F).

Erfindungsgemäß wird mindestens ein Treibmittel (D) eingesetzt. Zu Treibmitteln, welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlenstoffdioxid und im Falle von Ameisensäure zu Kohlenstoffdioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den eingesetzten Isocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind aliphatische oder cycloaliphatische Kohlenwasserstoffe mit 4 bis 8 Kohlenstoffatomen, wie Heptan, Hexan, und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen. Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Wasser oder Ameisensäure-Wasser-Mischungen.

Vorzugsweise werden als physikalische Treibmittel aliphatische oder cycloaliphatische Kohlenwasserstoffe mit 4 bis 8 Kohlenstoffatomen, besonders bevorzugt Pentanisomere, bzw. Mischungen von Pentanisomeren verwendet. Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei die Verwendung von Wasser oder Ameisensäure-Wasser Mischungen zusammen mit Pentanisomeren oder Gemischen aus Pentanisomeren bevorzugt sind.

Die eingesetzte Menge des Treibmittels bzw. der Treibmittelmischung liegt im Allgemeinen bei 1 bis 30 Gew.-%, vorzugsweise 1,5 bis 20 Gew.-%, besonders bevorzugt 2,0 bis 15 Gew.-%, jeweils bezogen auf die Summe der Komponenten (B) bis (F). Dient Wasser, oder eine Ameisensäure-Wasser-Mischung als Treibmittel, so wird es vorzugsweise der Komponente (B) in einer Menge von 0,2 bis 6 Gew.-%, bezogen auf die Komponente (B), zugesetzt. Der Zusatz des Wassers, oder der Ameisensäure-Wasser-Mischung kann in Kombination mit dem Einsatz der anderen beschriebenen Treibmittel erfolgen. Bevorzugt wird Wasser oder eine Ameisensäure-Wasser-Mischung in Kombination mit Pentan eingesetzt.

Als Katalysatoren (E) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponenten (B) mit den Polyisocyanaten (A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin.

Als Katalysatoren kommen ferner in Betracht: Amidine, wie 2,3-Dimethyl-3,4,5,6-tetrahydropyri-midin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-Teile Katalysator bzw. Katalysatorkombination, bezogen (d. h. gerechnet) auf 100 Gew.-Teile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Ebenso kommen Katalysatoren für die Trimerisierungsreaktion der NCO-Gruppen untereinander in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu einer stärkeren Vernetzung im Schaum und zu einer höheren Flammfestigkeit als die Urethan-Bindung.

Bevorzugt wird mindestens ein basischer Polyurethankatalysator verwendet, vorzugsweise aus der Gruppe der tertiären Amine. Insbesondere bevorzugt ist der Einsatz von Treibkatalysatoren wie Bis(2-dimethylaminoethyl)ether, Pentamethyldiethylentriamin, 2-(N,N-Dimethylamino-ethxy)ethanol, oder N,N,N-(trimethyl-N-hydroxyethyl-bisaminoethylether). Speziell wird entweder Bis(2-dimethylaminoethyl)ether oder Pentamethyldiethylentriamin als einziger aminischer Polyurethankatalysator verwendet. Bevorzugt wird zusätzlich mindestens ein Katalysator aus der Gruppe der Trimerisierungskatalysatoren verwendet, vorzugsweise Amoniumionen- oder Alkalimetallsalze, besonders bevorzugt Ammonium- oder Alkalimetallcarboxylate. Speziell wird Kaliumacetat als einziger Trimerisierungskatalysator verwendet.

Besonders bevorzugt wird als Katalysator (E) ein Katalysatorgemisch eingesetzt, enthaltend tertiäres Amin als Polyurethankatalysator und ein Metall- oder Ammoniumcarboxylat als Trimerisierungskatalysator.

Die Katalysatoren werden zweckmäßigerweise in der geringsten wirksamen Menge verwendet. Der Anteil der Komponente (E) an der Gesamtmenge der Komponenten (B) bis (F) beträgt vorzugsweise von 0,01 bis 15 Gew.-%, insbesondere von 0,05 bis 10 Gew.-%, speziell von 0,1 bis 5 Gew.-%.

Als silikonhaltige Schaumstabilisatoren (F) werden silikonbasierte Verbindungen eingesetzt, die die Oberflächenspannung der Verbindungen mit mindestens zwei Isocyanatgruppen reaktiven Wasserstoffatomen (B), herabsetzen. Bei diesen Substanzen handelt es sich vorzugsweise um Verbindungen, die eine amphiphile Struktur aufweisen, das heißt zwei Molekülteile mit unterschiedlicher Polarität aufweisen. Vorzugsweise weist der silikonbasierte Zellstabilisator einen Molekülteil mit Siliziumorganischen Bausteinen, wie Dimethylsiloxan oder Methylphenylsiloxan, und einen Molekülteil mit einer chemischen Struktur, die den Polyolen aus Komponente (B) ähnelt, auf. Vorzugsweise handelt es sich dabei um Polyoxyalkyleneinheiten. Besonders bevorzugt werden als silikonhaltige Zellstabilisatoren (F) Polysiloxan-Polyoxyalkylen-Blockcopolymere mit einem Oxyethylenanteil von kleiner 75 Gew.-% bezogen auf den gesamten Anteil Polyoxyalkyleneinheiten, eingesetzt. Vorzugsweise weisen diese Polyethylenoxyd- und/oder Polypropylenoxydeinheiten auf. Bevorzugt beträgt das Molekulargewicht der Polyoxyalkylen Seitenketten mindestens 1000 g/mol Seitenketten. Diese Verbindungen sind bekannt und beispielsweise beschrieben im "Kunststoffhandbuch, Band 7, Polyurethane", Carl Hanser Verlag, 3. Auflage 1993, Kapitel 3.4.4.2 und können beispielsweise hergestellt werden durch Umsetzung von Siloxan, beispielsweise Polydimethylsiloxan, mit Polyoxyalkylenen, insbesondere Polyethylenoxyd, Polypropylenoxyd oder Copolymeren aus Polyethylenoxyd und Polypropylenoxyd. Dabei können Polysiloxan-Polyoxyalkylen-Blockcopolymere erhalten werden, die die Oxyalkylenkette als Endgruppe oder als eine oder mehrere Seitenketten aufweisen. Die silikon-haltigen Zellstabilisatoren (F) können OH-Gruppen aufweisen, vorzugsweise sind diese aber frei von OH-Gruppen.

Dabei ist es erfindungswesentlich, dass der silikonhaltige Schaumstabilisator (F) in der Mischung mit Wasser klar und fließfähig bleibt. Die Klarheit und Fließfähigkeit der Mischung muss dabei im Mischungsverhältnis silikonhaltige Schaumstabilisator (F) zu Wasser von 80 : 20 und 60 : 40, jeweils bezogen auf das Gewicht gegeben sein und wird wie in den Beispielen beschrieben ermittelt.

Vorzugsweise wird der silikonhaltige Schaumstabilisator in einer Menge von 0,1 bis 10 Gew.-% besonders bevorzugt in Mengen von 0,5 bis 5 Gew.-% und insbesondere in Mengen von 1 - 4 Gew.-% silikonhaltiger Schaumstabilisator (F), bezogen auf das Gesamtgewicht der Komponenten (B) bis (F) eingesetzt. Dabei werden vorzugsweise neben dem silikonhaltigen Schaumstabilisator (F) weniger als 20 Gew.-%, besonders bevorzugt weniger als 10 Gew,.-%, mehr bevorzugt weniger als 5 Gew.-% und insbesondere keine weiteren Verbindungen eingesetzt, die üblicherweise als Schaumstabilisatoren in Polyurethanen verwendet werden. Dabei beziehen sich die Mengenangaben jeweils auf das Gesamtgewicht des silikonhaltigen Schaumstabilisators (F) und der weiteren Schaumstabilisatoren.

Der Reaktionsmischung zur Herstellung der Polyurethan-Hartschaumstoffe können gegebenenfalls noch weitere Hilfsmittel und/oder Zusatzstoffe (G) zugesetzt werden. Genannt seien beispielsweise oberflächenaktive Substanzen, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung, falls eingesetzt, vorteilhafterweise in Mengen von 0,5 bis 50 Gew.-%, vorzugsweise 1 bis 40 Gew.-%, bezogen auf das Gewicht der Komponenten (B) bis (G), zugegeben, wobei jedoch der Gehalt an Matten, Vliesen und Geweben aus natürlichen und synthetischen Fasern Werte bis 80 Gew.-%, bezogen auf das Gewicht der Komponenten (B) bis (G), erreichen kann.

Nähere Angaben über die oben genannten üblichen Hilfs- und Zusatzstoffe (G) sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 und 1993 zu entnehmen.

Zur Herstellung der Polyurethan-Hartschaumstoffe werden die Polyisocycanate (A) und die Polyolkomponente bestehend aus den Komponenten: (B), (C), (D), (E), (F), und gegebenenfalls (G) in solchen Mengen zur Umsetzung gebracht, dass der Isocyanatindex in einem Bereich zwischen 90 und 160, vorzugsweise zwischen 95 und 140 und besonders bevorzugt zwischen 105 und 140 liegt. Der Isocyanatindex ist das molare Verhältnis von Isocyanatgruppen zu mit Isocyanatgruppen reaktiven Gruppen multipliziert mit 100.

Die Ausgangskomponenten werden bei einer Temperatur von 15 bis 90 °C, vorzugsweise von 20 bis 60 °C, insbesondere von 20 bis 45 °C gemischt. Das Reaktionsgemisch kann mit Hoch- oder Niederdruckdosiermaschinen in geschlossene Stützwerkzeuge gegossen werden. Nach dieser Technologie werden z.B. diskontinuierliche Sandwichelemente gefertigt.

Bevorzugt werden die erfindungsgemäßen Hartschaumstoffe auf kontinuierlich arbeitenden Doppelbandanlagen hergestellt. Hier werden mit einer Hochdruckmaschine die Polyol- und die Isocyanatkomponente dosiert und in einem Mischkopf vermischt. Dem Polyolgemisch können zuvor mit separaten Pumpen Katalysatoren und/oder Treibmittel zu dosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein, in dem das Reaktionsgemisch aufschäumt und aushärtet. Nach Verlassen des Doppelbandes wird der endlose Strang in die gewünschten Abmessungen zerschnitten. Auf diese Weise können Sandwichelemente mit metallischen Deckschichten oder Dämmelemente mit flexiblen Deckschichten hergestellt werden.

Als untere und obere Deckschichten, die gleich oder verschieden sein können, können üblicherweise im Doppelbandverfahren eingesetzte flexible oder starre Deckschichten verwendet werden. Diese umfassen Deckschichten aus Metall, wie Aluminium oder Stahl, Deckschichten aus Bitumen, Papier, Vliesstoffen, Kunststoffplatten, zum Beispiel aus Polystyrol, Kunststofffolien, wie Polyethylen-Folien oder Deckschichten aus Holz. Dabei können die Deckschichten auch beschichtet sein, beispielsweise durch einen üblichen Lack.

Die nach dem erfindungsgemäßen Verfahren hergestellten Polyurethan-Hartschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- oder Kühlsektor, z.B. als Zwischenschicht für Sandwichelemente.

Die erfindungsgemäßen Polyurethan-Hartschaumstoffe zeichnen sich durch eine besonders hohe Flammwidrigkeit aus und ermöglichen daher den Einsatz von reduzierten Mengen an Flammschutzmittelmengen, insbesondere eine reduzierte Menge an toxischen, halogenierten Flammschutzmitteln. Vorzugsweise weisen die erfindungsgemäßen Hartschaumstoffe eine Flammenhöhe von weniger als 15 cm, vorzugsweise unter 14 cm und insbesondere von unter 13,5 cm nach einem Test entsprechend EN-ISO 11925-2 auf.

Weiterhin erfüllen die erfindungsgemäßen PUR-Hartschaumstoffe auch bei geringen Formtemperaturen < 55 °C und ohne zusätzlichen Haftvermittlerauftrag alle notwendigen Anforderungen an eine gute Verarbeitbarkeit und Endprodukteigenschaft: Schnelle Schaumhärtung, gute Schaumanhaftung auf metallischen Deckschichten, wenig Fehlstellen auf der Schaumoberfläche, gute Druckfestigkeiten und gutes Wärmedämmvermögen.

Im Folgenden wird die vorliegende Erfindung im Rahmen von Beispielen verdeutlicht:

### Beispiele

Es wurden die nachstehenden Einsatzstoffe verwendet:
Polyetherol 1: Polyetheralkohol mit einer Hydroxylzahl von 490 mg KOH/g und einer mittleren Funktionalität von 4,3, basierend auf Propylenoxid und einer Mischung aus Saccharose und Glycerin als Starter.
Polyetherol 2: Polyetheralkohol mit einer Hydroxylzahl von 750 mg KOH/g, basierend auf Propylenoxid und Ethylendiamin als Starter.
Polyetherol 3: Polyetheralkohol mit einer Hydroxylzahl von 250 mg KOH/g, basierend auf Propylenoxid und Propylenglycol als Starter.
Polyetherol 4: Polyetheralkohol mit einer Hydroxylzahl von 460 mg KOH/g und einer mittleren Funktionalität von 4,4, basierend auf Propylenoxid und einer Mischung aus Saccharose, Glycerin und Fettsäuremethylester als Starter.
Polyetherol 5: Polyetheralkohol mit einer Hyxroxylzahl von 800 mg KOH/g, basierend auf Propylenoxyd und Glycerin als Starter.
Polyesterol 1: Veresterungsprodukt von Phtalsäureanhydrid, Diethylenglycol, Monoethylenglycol und Ölsäure, mit einer Hydroxylzahl von 210 mg KOH/g
Polyesterol 2: Veresterungsprodukt von Terephtalsäure, Diethylenglycol, Ölsäure und einem auf eine Hydroxylzahl von 600 mg KOH/g ethoxylierten Trimethylolpropan, mit einer Hydroxylzahl von 245 mg KOH/g.
Mannich Polyol 1: Desmophen^{®} M 530 der Firma "Covestro": Propoxyliertes Mannichkondensat aufgebaut aus Bisphenol A, Formaldehyd und Diethanolamin mit einer Hydroxylzahl von 530 mg KOH/g.
Mannich Polyol 2: Rokopol^{®} RF 151 der Firma "PCC Rokita": Propoxiliertes Mannichkondensat aufgebaut aus Nonylphenol, Formaldehyd und Diethanolamin mit einer Hydroxylzahl von 450 mg KOH/g.
PHT-4-Diol: Tetrabromphtalsäurediol der Firma "Great Lakes Solutions" mit einem Bromgehalt von 46 Gew.%, einer Hydroxylzahl von 220 - 235 mg KOH/g und einer Funktionalität von 2,0.
TCPP: Tris(2-chlorisopropyl)phosphat mit einem Chlorgehalt von 32,5 Gew.% und einem Phosphorgehalt von 9,5 Gew.%.
Katalysator A: Trimerisierungskatalysator bestehend aus 47 Gew.-% Kaliumacetat gelöst in 50,2 Gew.-% Monoethylenglycol und 2,8 Gew.% Leitungswasser.
Katalysator B: Katalysator bestehend aus 19,6 Gew.-% Tetramethylhexandiamin, 25 Gew.-% Lupragen^{®} N 600 [1,3,5-Tris(dimethylaminopropyl)-sym-hexahydrotriazin], 14,6 Gew.-% Bis(2-dimethylaminoethyl)ether und 40,8 Gew.-% von Polyetherol 3.
Lupranat^{®} M50: polymeres Methylendiphenyldiisocyanat (PMDI), mit einer Viskosität von ca. 500 mPa*s bei 25 °C.
Pentan S 80/20: Mischung aus 80 Gew.% n-Pentan und 20 Gew.% Isopentan.

Laborverschäumung zum Einstellen identischer Dichten und Abbindezeiten (Gelzeiten) Aus den oben genannten Einsatzstoffen wurden die in der Tabelle 3, 4 und 5 aufgezeigten phasenstabilen Polyolkomponenten hergestellt. Die Polyolkomponenten wurden durch Variation von Leitungswasser und Katalysator B auf identische Abbindezeiten von 40 s ± 1 s und Becherschaumdichten von 32 kg/m³ ± 1 kg/m³ eingestellt. Die Menge an Pentan und Katalysator A wurde so gewählt, dass die fertigen Schäume aller Einstellungen identische Konzentrationen enthielten. Die so eingestellten Polyolkomponenten wurden mit Lupranat^{®} M50 in einem solchen Mischungsverhältnis zur Reaktion gebracht, dass die Kennzahl aller Einstellungen 120 ± 5 betrug.

Auf diese Weise wurde 80 g Reaktionsgemisch in einem Pappbecher umgesetzt, indem die Mischung für 10 Sekunden intensiv mit einem Labor Rührer vermischt wurde.

### Kleinbrennertest entsprechend EN-ISO 11925-2

Die Prüfkörper für den Kleinbrennertest wurden wie folgt hergestellt:
260 g des auf identische Reaktionszeiten und Schaumdichten eingestellten Reaktionsgemisches, wurden in einem Pappbecher mit Hilfe eines Laborrührwerks für 10 Sekunden intensiv verrührt und in eine Kastenform mit den Innenmaßen 15 cm x 25 cm überführt. Nach vollständiger Aushärtung des Reaktionsgemisches wurde der entstandene Hartschaumblock 24 Stunden später entformt und an allen Rändern um 3 cm gekürzt. Die mit den Maßen: 190 x 90 x 20 mm entnommenen Prüfkörper wurden anschließend für einen Tag konditioniert und entsprechend DIN EN-ISO 11925-2 mittels Kantenbeflammung an der 90 mm Seite getestet.

### Bestimmungsmethode zur Beurteilung der Wassermischbarkeit von Silikon-haltigen Schaumstabilisatoren:

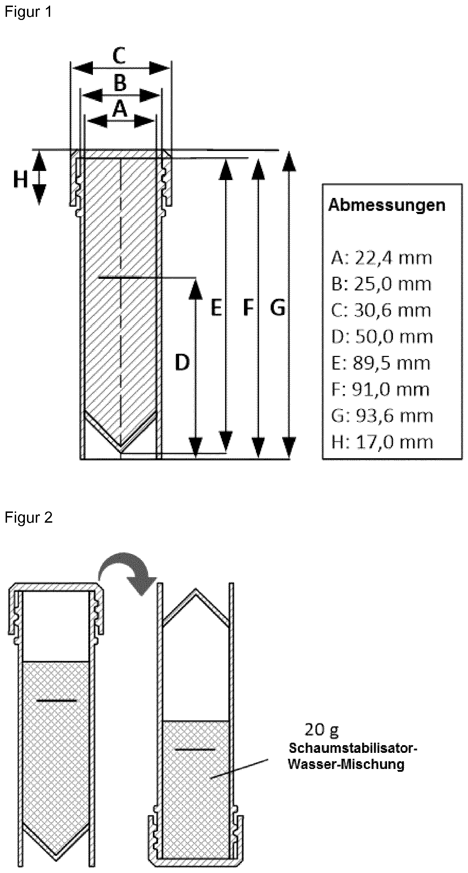

Die Beurteilung zur Wassermischbarkeit der kommerziell verfügbaren, silikonhaltigen Schaumstabilisatoren erfolgte mittels einer Fließfähigkeitsbestimmung und einer Turbidimetriemessung. Die Fließfähigkeitsbestimmung erfolgte in zwei Konzentrationsbereichen. Dazu wurden 80 Gew.-Teile, beziehungsweise 60 Gew.-Teile des silikonhaltigen Schaumstabilisators bei 20 °C mit Leitungswasser auf 100 Gew.-Teile aufgefüllt. Anschließend wurde der Schaumstabilisator und das Leitungswasser mit Hilfe eines Laborrührers intensiv vermischt und 20 g der Mischung in ein glasklares Schraubröhrchen aus Polystyrol mit konischem Boden, einem Nennvolumen von 30 ml, einer Höhe von 91,0 mm und einem Innendurchmesser von 22,3 mm (s. Abbildung 1) der Firma "Greine Bio-One" überführt. Die Mischung wurde im aufrechtstehenden Glasröhrchen 3 Tage bei 20 °C gelagert. Anschließend wurden die Mischungen hinsichtlich ihrer Fließfähigkeit beurteilt.

Zur Bestimmung der Fließfähigkeit wurde das Schraubröhrchen zunächst auf einer Höhe von 5 cm gemessen ab der Unterkante markiert (s. Abbildung 2). Diese Markierung liegt somit unterhalb des Flüssigkeitsspiegels der Schaumstabilisator/Wasser Mischung. Anschließend wurde das Schraubröhrchen innerhalb eines Zeitraums von ca. einer Sekunde um 180 ° gedreht und die Fließzeit gemessen, bis zu der sich der jetzt unterhalb der Markierung befindliche Teil des Röhrchens vollständig mit der Stabilisator-Wasser-Mischung gefüllt hat. Dies ist der Fall, wenn ca. 80 Vol.% der Mischung von oben nach unten geflossen sind. Eventuell eingeschlossene Luftblasen bis zu einem Durchmesser von 1 cm bleiben dabei unberücksichtigt.
Abbildung 1: Abmessungen des Schraubröhrchens
Abbildung 2: Fließfähigkeitsbestimmung

Anhand der Fließzeiten wurden zwei Fließfähigkeitsklassen definiert:

**Tabelle 1 (Definition der Fließfähigkeit)**

| Fließfähigkeitsklasse: | Fließzeit: |
|---|---|
| Flüssige Mischung | < 20 Sekunden |
| Zähflüssige Mischung | ≥ 20 Sekunden |

Zusätzlich zur Fließfähigkeitsbestimmung wurden Schaumstabilisator/Wasser Gemische (80/20 und 60/40 Gew.%) mittels der Turbidimetriemessung hinsichtlich Ihrer Trübheit beurteilt. Die Messung erfolgte entsprechend DIN EN ISO 7027-1:2016-11 mit Hilfe des Tubidimeters "TURB 430 IR" der Firma WTW. Die Messgerätkalibrierung erfolgte mit Hilfe der nach DIN ISO als Sekundärstandard anerkannten AMCO-Clear^{®} Standards.

Zur Messung wurden 20 g des Schaumstabilisator/Wasser Gemisches in die Messküvette gegeben. Als Messküvetten dienten Wheaton Szintillations-Fläschchen aus temperaturwechselbeständigem, in der Wandstärke sehr gleichmäßigem Borosilikatglas, entsprechend ASTM Standard Typ 1 Klasse A. Gelförmige Gemische wurden in den mit Schraubdeckeln fest verschlossenen Küvetten so lange auf 90 °C aufgeheizt, bis alle Luftblasen verschwunden waren. Die Messung erfolgte bei einer Raum- und Komponententemperatur von 20 °C.

Entsprechend der Ergebnisse wurden zwei Trübheitsklassen definiert:

**Tabelle 2 (Definition der Fließfähigkeit)**

| Trübheitsklasse: | Messwert: |
|---|---|
| Klar | < 8 FNU / NTU |
| Trüb | ≥ 8 FNU / NTU |

Schaumstabilisatoren, die mit Wasser in den beiden Verhältnissen eine klare und flüssige Mischung ergeben, weisen eine gute Wassermischbarkeit auf.

### Versuchsergebnisse Mischbarkeit

Entsprechend der unter 2.4 beschriebenen Bestimmungsmethode wurden verschiedene kommerziell verfügbare, Silikon-haltige Schaumstabilisatoren auf ihre Mischbarkeit mit Wasser untersucht. Es zeigten sich folgende Ergebnisse:

**Tabelle 3 (Ergebnisse zur Mischbarkeit von Silizium-haltigen Schaumstabilisatoren mit Wasser)**

| | Fließfähigkeit [Sekunden] | | Trübung [FTU/NTU] | |
|---|---|---|---|---|
| | (80:20 Mischung) | (60:40 Mischung) | (80:20 Mischung) | (60:40 Mischung) |
| Dabco^{®} DC 193 (Erfindungsgemäß) | 4 | 13 | 4,2 | 1,3 |
| Tegostab^{®} B 84711 (Erfindungsgemäß) | 10 | 2 | 3,2 | 1,1 |
| Dabco^{®} DC 5103 (Erfindungsgemäß) | 1 | 1 | 3,4 | 4,2 |
| Tegostab^{®} B 8485 (Vergleichsbeispiel) | > 40 | > 40 | 8,9 | 32,5 |
| Tegostab^{®} B 8490 (Vergleichsbeispiel) | > 40 | > 40 | 5,4 | 26,6 |
| Tegostab^{®} B 8498 (Vergleichsbeispiel) | > 40 | > 40 | 18,9 | 20,5 |
| Tegostab^{®} B 8467 (Vergleichsbeispiel) | > 40 | > 40 | 15,7 | 19,1 |
| Tegostab^{®} B 8491 (Vergleichsbeispiel) | > 40 | > 40 | 18,0 | 18,1 |
| Tegostab^{®} B 8476 (Vergleichsbeispiel) | > 40 | > 40 | 20,1 | 13,9 |
| Niax^{®} L 6900 (Vergleichsbeispiel) | 16 | > 40 | 8,0 | 30,1 |
| Niax^{®} L 6895 (Vergleichsbeispiel) | > 40 | 39 | 6,9 | 3,3 |
| Tegostab^{®} B 8443 (Vergleichsbeispiel) | 16 | > 40 Sek. | 22,6 | 51,8 |

Die folgenden Beispiele und Vergleichsbeispiele wurden mittels Labor-Verschäumung hergestellt. Zur Herstellung wurden die unter 2.1 aufgeführten Einsatzstoffe und die in Tabelle 3 beschriebenen Silizium-haltigen Schaumstabilisatoren genutzt:

**Tabelle 4 (Beispiele)**

| | Beispiel 1 | Beispiel 2 | Beispiel 3 | Beispiel 4 | Beispiel 5 | Beispiel 6 |
|---|---|---|---|---|---|---|
| Polyetherol 1 | 10 | 10 | 10 | 10 | 10 | |
| Polyetherol 2 | 10 | 10 | 10 | 10 | 10 | 10 |
| Polyetherol 4 | | | | | | 10 |
| Polyesterol 1 | 12 | 12 | 12 | 12 | | |
| Polyesterol 2 | | | | | 12 | 12 |
| Mannich Polyol 1 | 30 | 30 | 30 | | 30 | 30 |
| Mannich Polyol 2 | | | | 30 | | |
| PHT 4 Diol | 5 | 5 | 5 | 5 | 5 | 5 |
| TCPP | 30 | 30 | 30 | 30 | 30 | 30 |
| Leitungswasser | 1 | 1 | 1 | 1 | 1 | 1 |
| Dabco^{®} DC 193 | 2 | | | 2 | 2 | 2 |
| Dabco^{®} DC 5103 | | 2 | | | | |
| Tegostab^{®} B 84711 | | | 2 | | | |
| Summe | 100 | 100 | 100 | 100 | 100 | 100 |
| | | | | | | |
| Kennzahl | 118 | 118 | 118 | 124 | 116 | 119 |
| | | | | | | |
| Ø Flammenhöhe EN-ISO 11925-2 | 11,5 | 13,5 | 12,5 | 12,5 | 12,3 | 12,3 |

**Tabelle 5 (Vergleichsbeispiele)**

| | Vergleichsbeispiel 1 | Vergleichsbeispiel 2 | Vergleichsbeispiel 3 | Vergleichsbeispiel 4 | Vergleichsbeispiel 5 | Vergleichsbeispiel 6 | Vergleichsbeispiel 7 | Vergleichsbeispiel 8 | Vergleichsbeispiel 9 |
|---|---|---|---|---|---|---|---|---|---|
| Polyetherol 1 | 10 | 10 | 10 | 10 | 10 | 10 | 10 | 10 | 10 |
| Polyetherol 2 | 10 | 10 | 10 | 10 | 10 | 10 | 10 | 10 | 10 |
| Polyesterol 1 | 12 | 12 | 12 | 12 | 12 | 12 | 12 | 12 | 12 |
| Mannich Polyol 1 | 30 | 30 | 30 | 30 | 30 | 30 | 30 | 30 | 30 |
| PHT 4 Diol | 5 | 5 | 5 | 5 | 5 | 5 | 5 | 5 | 5 |
| TCPP | 30 | 30 | 30 | 30 | 30 | 30 | 30 | 30 | 30 |
| Leitungswasser | 1 | 1 | 1 | 1 | 1 | 1 | 1 | 1 | 1 |
| Tegostab^{®} B 8498 | 2 | | | | | | | | |
| Tegostab^{®} B 8467 | | 2 | | | | | | | |
| Niax^{®} L 6900 | | | 2 | | | | | | |
| Tegostab^{®} B 8485 | | | | 2 | | | | | |
| Tegostab^{®} B 8490 | | | | | 2 | | | | |
| Niax^{®} L 6895 | | | | | | 2 | | | |
| Tegostab^{®} B 8476 | | | | | | | 2 | | |
| Tegostab^{®} B 8491 | | | | | | | | 2 | |
| Tegostab^{®} B 8443 | | | | | | | | | 2 |
| Summe | 100 | 100 | 100 | 100 | 100 | 100 | 100 | 100 | 100 |
| Kennzahl | 118 | 118 | 118 | 118 | 118 | 118 | 118 | 118 | 118 |
| Ø Flammenhöhe EN-ISO 11925-2 | 16,4 | 15,9 | 15,7 | 16,7 | 15,1 | 16,5 | 16,3 | 15,8 | 16,4 |

**Tabelle 6 (Vergleichsbeispiele)**

| | Vergleichsbeispiel 10 | Vergleichsbeispiel 11 | Vergleichsbeispiel 12 | Vergleichsbeispiel 13 | Vergleichsbeispiel 14 | Vergleichsbeispiel 15 |
|---|---|---|---|---|---|---|
| Polyetherol 1 | 40 | 10 | 10 | 10 | 10 | 10 |
| Polyetherol 2 | 10 | 10 | | | | |
| | | | | | | |
| Polyetherol 3 | | 12 | | | | |
| Polyetherol 5 | | | 10 | 10 | 10 | 10 |
| Polyesterol 1 | 12 | | 12 | 12 | 12 | 12 |
| Mannich Polyol 1 | | | 10 | | 10 | |
| Mannich Polyol 2 | | 30 | | 10 | | 10 |
| PHT 4 Diol | 5 | 5 | 5 | 5 | 5 | 5 |
| | | | | | | |
| TCPP | 30 | 30 | 30 | 30 | 30 | 30 |
| Leitungswasser | 1 | 1 | 1 | 1 | 1 | 1 |
| Dabco^{®} DC 193 | 2 | 2 | 2 | 2 | | |
| Dabco^{®} DC 5103 | | | | | 2 | 2 |
| | | | | | | |
| Summe | 100 | 100 | 100 | 100 | 100 | 100 |
| | | | | | | |
| Kennzahl | 120 | 116 | 116 | 121 | 116 | 121 |
| | | | | | | |
| Ø Flammenhöhe EN-ISO 11925-2 | 16,1 | 16,3 | 13,8 | 13,9 | 15,2 | 14,9 |

Überraschenderweise zeigte sich, dass alle silikonhaltigen Schaumstabilisatoren, die mittels der beschriebenen Methoden in allen aufgeführten Massenverhältnissen eine mit Wasser bei 20 °C klare und flüssige Mischung ergeben, in der erfindungsgemäßen Polyolkomponente zu einer signifikanten Verbesserung der Hartschaumbrandfestigkeit nach EN ISO 11925-2 führen. Die so hergestellten, erfindungsgemäßen Hartschaumstoffe aus Beispiel 1 - 6 bestehen daher mit deutlich reduzierten Gehältern an halogenhaltigen Flammschutzmitteln die Brandprüfung nach EN ISO 11925-2. Hierbei spielt es keine Rolle auf welcher aromatischen Basis das Mannichpolyol (b2) oder das Polyesterpolyol (b3) aufgebaut ist. Werden hingegen in der identischen Polyolkomponente Silikon-haltige Schaumstabilisatoren verwendet, die mit Wasser in der unter 2.4 beschriebenen Methode in einer der aufgeführten Mischungsverhältnisse ein Gel oder eine trübe Mischung bilden, so ergeben sich deutlich schlechtere Brandfestigkeiten der hergestellten Hartschaumstoffe und die Brandprüfung entsprechend EN ISO 11925-2 wird nicht bestanden (Vergleichsbeispiele 1 - 9).

Ein Abweichen von der erfindungsgemäßen A-Komponente führt hingegen auch bei Verwendung von Schaumstabilisatoren, die in der unter 2.4 beschriebenen Methode in allen aufgeführten Massenverhältnissen eine mit Wasser bei 20 °C klare und fließfähige Mischung ergeben, zu einem nicht Bestehen oder einer signifikant größeren Flammenhöhe im Brandtest nach EN ISO 11925-2 (Vergleichsbeispiele 10 - 15).

## Patentansprüche

1. Verfahren zur Herstellung von Polyurethan-Hartschaumstoffen, bei dem man
(A) Polyisocyanate mit
(B) Verbindungen mit mindestens zwei mit Isocyanatgruppen reaktiven Wasserstoffatomen
(C) Flammschutzmittel
(D) Treibmittel
(E) Katalysator und
(F) silikonhaltigem Schaumstabilisator
zu einer Reaktionsmischung vermischt und zum Polyurethan-Hartschaumstoff aushärtet, wobei die Komponente (B) mindestens ein Polyetherpolyol (b1), hergestellt durch Alkoxylierung von Ethylendiamin, Toluylendiamin oder Mischungen davon,
mindestens ein aromatisches Mannichkondensat (b2), das alkoxyliert sein kann, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest oder für Wasserstoff steht, einem oder mehreren Aldehyden und/oder Ketonen und einem oder mehreren primären oder sekundären Aminen,
mindestens ein aromatisches Polyesterpolyol (b3) und
gegebenenfalls Kettenverlängerungs- und/oder Vernetzungsmittel enthält,
wobei als Schaumstabilisator (F) ein silikonhaltiger Schaumstabilisator verwendet wird, bei dem eine Mischung, bestehend aus 80 Gew.-% Schaumstabilisator (F) und 20 Gew.-% Wasser sowie 60 Gew.-% Schaumstabilisator (F) und 40 Gew.-% Wasser, jeweils bezogen auf das Gesamtgewicht der Mischung, nach dreitägiger Lagerung bei 20 °C eine fließfähige Mischung mit weniger als 8 nephelometrischen Trübungseinheiten, bestimmt nach den in der Spezifikation angegebenen Verfahren, bildet.

2. Verfahren nach Anspruch 1, **dadurch gekennzeichnet, dass** 0,1 bis 10 Gew.-% silikonhaltiger Schaumstabilisator (F), bezogen auf das Gesamtgewicht der Komponenten (B) bis (F) eingesetzt werden.

3. Verfahren nach Anspruch 1 oder Anspruch 2, **dadurch gekennzeichnet, dass** der silikon-haltige Stabilisator (F) ein Polysiloxan-Polyoxyalkylen-Blockcopolymer mit einem Oxyethylenanteil von kleiner 75 Gew.-%, bezogen auf das Gesamtgewicht des Polyoxyalkylen im Blockpolymeren, ist.

4. Verfahren nach einem der Ansprüche 1 bis 3, **dadurch gekennzeichnet, dass** neben dem silikonhaltigen Schaumstabilisator (F) weniger als 20 Gew.-% weitere Schaumstabilisatoren, bezogen auf das Gesamtgewicht des silikonhaltigen Schaumstabilisators (F) und der weiteren Schaumstabilisatoren, eingesetzt werden.

5. Verfahren nach einem der Ansprüche 1 bis 4, **dadurch gekennzeichnet, dass** die Isocyanatkennzahl von 95 bis 140 beträgt.

6. Verfahren nach einem der Ansprüche 1 bis 5, **dadurch gekennzeichnet, dass** der Anteil an Flammschutzmittel, bezogen auf das Gesamtgewicht der Komponenten (B) bis (F), von 25 Gew.-% bis 38 Gew.-% beträgt.

7. Verfahren nach einem der Ansprüche 1 bis 6, **dadurch gekennzeichnet, dass** das Treibmittel (D) mindestens einen aliphatischen oder cycloaliphatischen Kohlenwasserstoff mit 4 bis 8 Kohlenstoffatomen enthält.

8. Verfahren nach einem der Ansprüche 1 bis 7, **dadurch gekennzeichnet, dass** die Komponente (B) 2 bis 60 Gew.-% Polyetherpolyol (b1), 10 bis 70 Gew.-% aromatisches Mannichkondensat (b2) und 5 bis 50 Gew.-% aromatisches Polyesterpolyol (b3), jeweils bezogen auf das Gesamtgewicht der Komponente (B), enthält.

9. Verfahren nach einem der Ansprüche 1 bis 8, **dadurch gekennzeichnet, dass** das aromatische Mannichkondensat (b2) propoxyliert ist und eine OH-Zahl von 200 bis 600 mg KOH/g aufweist.

10. Verfahren nach einem der Ansprüche 1 bis 9, **dadurch gekennzeichnet, dass** das aromatische Polyesterpolyol (b3) durch Veresterung von Dicarbonsäuren oder deren Derivaten, enthaltend Therephthalsäure oder Terephthalsäurederivate, und Dialkoholen erhalten wird und eine Funktionalität von größer als 2 und eine OH-Zahl von 100 bis 800 mg KOH/g aufweist.

11. Verfahren nach einem der Ansprüche 1 bis 10, **dadurch gekennzeichnet, dass** die Komponente (B) neben dem Polyetherpolyol (b1), dem aromatischen Mannichkondensat (b2) und dem aromatisches Polyesterpolyol (b3) keine weiteren Verbindungen mit mindestens zwei mit Isocyanatgruppen reaktiven Wasserstoffatomen enthält.

12. Verfahren nach einem der Ansprüche 1 bis 11, **dadurch gekennzeichnet, dass** der Anteil an Flammschutzmittel (C) 25 bis 35 Gew.-%, bezogen auf das Gesamtgewicht der Komponenten (B) bis (F) beträgt.

13. Verfahren nach einem der Ansprüche 1 bis 12, **dadurch gekennzeichnet, dass** der Katalysator (E) ein Katalysatorgemisch ist, enthaltend tertiäres Amin und Metall-oder Ammoniumcarboxylat.

14. Verfahren nach einem der Ansprüche 1 bis 13, **dadurch gekennzeichnet, dass** der Polyurethanhartschaum kontinuierlich nach dem Doppelbandverfahren hergestellt wird.

15. Polyurethan-Hartschaumstoff, erhältlich nach einem Verfahren gemäß einem der Ansprüche 1 bis 14.

## Claims

1. A process for producing rigid polyurethane foams, in which
(A) polyisocyanates are mixed with
(B) compounds having at least two hydrogen atoms which are reactive toward isocyanate groups
(C) flame retardant
(D) blowing agent
(E) catalyst and
(F) silicone-comprising foam stabilizer
to give a reaction mixture and cured to give the rigid polyurethane foam,
wherein the component (B) comprises at least one polyether polyol (b1) prepared by alkoxylation of ethylenediamine, tolylenediamine or mixtures thereof,
at least one aromatic Mannich condensate (b2), which may be alkoxylated, preparable by reaction of an aromatic compound which bears on an aromatic ring at least one hydroxyl group and/or at least one - NHR group, where R is any organic radical or hydrogen, one or more aldehydes and/or ketones and one or more primary or secondary amines,
at least one aromatic polyester polyol (b3) and optionally chain extenders and/or crosslinkers,
wherein the foam stabilizer (F) used is a silicone-comprising foam stabilizer where a mixture consisting of 80% by weight of foam stabilizer (F) and 20% by weight of water and also 60% by weight of foam stabilizer (F) and 40% by weight of water, in each case based on the total weight of the mixture, forms, after storage at 20°C for three days, a flowable mixture having less than 8 nephelometric turbidity units.

2. The process according to claim 1, wherein from 0.1 to 10% by weight of silicone-comprising foam stabilizer (F), based on the total weight of the components (B) to (F), is used.

3. The process according to claim 1 or claim 2, wherein the silicone-comprising stabilizer (F) is a polysiloxane-polyoxyalkylene block copolymer having a proportion of oxyethylene units of less than 75% by weight, based on the total weight of the polyoxyalkylene in the block polymer.

4. The process according to any of claims 1 to 3, wherein less than 20% by weight of further foam stabilizers, based on the total weight of the silicone-comprising foam stabilizer (F) and the further foam stabilizers, is used in addition to the silicone-comprising foam stabilizer (F).

5. The process according to any of claims 1 to 4, wherein the isocyanate index is from 95 to 140.

6. The process according to any of claims 1 to 5, wherein the proportion of flame retardant, based on the total weight of the components (B) to (F), is from 25% by weight to 38% by weight.

7. The process according to any of claims 1 to 6, wherein the blowing agent (D) comprises at least one aliphatic or cycloaliphatic hydrocarbon having from 4 to 8 carbon atoms.

8. The process according to any of claims 1 to 7, wherein the component (B) comprises from 2 to 60% by weight of polyether polyol (b1), from 10 to 70% by weight of aromatic Mannich condensate (b2) and from 5 to 50% by weight of aromatic polyester polyol (b3), in each case based on the total weight of the component (B).

9. The process according to any of claims 1 to 8, wherein the aromatic Mannich condensate (b2) is propoxylated and has an OH number of from 200 to 600 mg KOH/g.

10. The process according to any of claims 1 to 9, wherein the aromatic polyester polyol (b3) is obtained by esterification of dicarboxylic acids or derivatives thereof, comprising terephthalic acid or terephthalic acid derivatives, and dialcohols and has a functionality of greater than 2 and an OH number of from 100 to 800 mg KOH/g.

11. The process according to any of claims 1 to 10, wherein the component (B) does not comprise any further compounds having at least two hydrogen atoms which are reactive toward isocyanate groups in addition to the polyether polyol (b1), the aromatic Mannich condensate (b2) and the aromatic polyester polyol (b3).

12. The process according to any of claims 1 to 11, wherein the proportion of flame retardant (C) is from 25 to 35% by weight, based on the total weight of the components (B) to (F).

13. The process according to any of claims 1 to 12, wherein the catalyst (E) is a catalyst mixture comprising tertiary amine and metal carboxylate or ammonium carboxylate.

14. The process according to any of claims 1 to 13, wherein the rigid polyurethane foam is produced continuously by the double belt process.

15. A rigid polyurethane foam obtainable by a process according to any of claims 1 to 14.

## Revendications

1. Procédé pour la production de mousses dures de polyuréthane dans lequel on mélange
(A) des polyisocyanates avec
(B) des composés présentant au moins deux atomes d'hydrogène réactifs avec les groupes isocyanate,
(C) un agent ignifuge
(D) un agent gonflant
(E) un catalyseur et
(F) un stabilisant de mousse contenant de la silicone en un mélange réactionnel et on le durcit en mousse dure de polyuréthane,
le composant (B) contenant au moins un polyétherpolyol (b1), préparé par alcoxylation d'éthylènediamine, de toluylènediamine ou de mélanges de celles-ci,
au moins un condensat de Mannich aromatique (b2), qui peut être alcoxylé, pouvant être préparé par transformation d'un composé aromatique, qui porte, sur un cycle aromatique, au moins un groupe hydroxyle et/ou au moins un groupe -NHR, R représentant un radical organique quelconque ou hydrogène, d'un(e) ou de plusieurs aldéhydes et/ou cétones et d'une ou de plusieurs amines primaires ou secondaires,
au moins un polyesterpolyol aromatique (b3) et
le cas échéant des agents d'allongement de chaîne et/ou des réticulants,
où on utilise, comme stabilisant de mousse (F), un stabilisant de mousse contenant de la silicone
dans lequel un mélange, constitué par 80% en poids de stabilisant de mousse (F) et par 20% en poids d'eau ainsi que par 60% en poids de stabilisant de mousse (F) et 40% en poids d'eau, à chaque fois par rapport au poids total du mélange, forme après un entreposage pendant trois jours à 20°C, un mélange pouvant s'écoulement présentant moins de 8 unités néphélométriques, déterminées selon le procédé indiqué dans la description.

2. Procédé selon la revendication 1, **caractérisé en ce qu'**on utilise 0,1 à 10% en poids de stabilisant de mousse contenant de la silicone (F), par rapport au poids total des composants (B) à (F).

3. Procédé selon la revendication 1 ou la revendication 2, **caractérisé en ce que** le stabilisant de mousse contenant de la silicone (F) est un copolymère à blocs de polysiloxane-polyoxyalkylène présentant une proportion d'oxyéthylène inférieure à 75% en poids, par rapport au poids total du polyoxyalkylène dans le copolymère à blocs.

4. Procédé selon l'une quelconque des revendications 1 à 3, **caractérisé en ce qu'**on utilise, outre le stabilisant de mousse contenant de la silicone (F), moins de 20% en poids d'autres stabilisants de mousse, par rapport au poids total du stabilisant de mousse contenant de la silicone (F) et des autres stabilisants de mousse.

5. Procédé selon l'une quelconque des revendications 1 à 4, **caractérisé en ce que** l'indice d'isocyanate est de 95 à 140.

6. Procédé selon l'une quelconque des revendications 1 à 5, **caractérisé en ce que** la proportion d'agent ignifuge, par rapport au poids total des composants (B) à (F), est de 25% en poids à 38% en poids.

7. Procédé selon l'une quelconque des revendications 1 à 6, **caractérisé en ce que** l'agent gonflant (D) contient au moins un hydrocarbure aliphatique ou cycloaliphatique comprenant 4 à 8 atomes de carbone.

8. Procédé selon l'une quelconque des revendications 1 à 7, **caractérisé en ce que** le composant (B) contient 2 à 60% en poids de polyétherpolyol (b1), 10 à 70% en poids de condensat de Mannich aromatique (b2) et 5 à 50% en poids de polyesterpolyol aromatique (b3), à chaque fois par rapport au poids total du composant (B).

9. Procédé selon l'une quelconque des revendications 1 à 8, **caractérisé en ce que** le condensat de Mannich aromatique (b2) est propoxylé et présente un indice d'OH de 200 à 600 mg de KOH/g.

10. Procédé selon l'une quelconque des revendications 1 à 9, **caractérisé en ce que** le polyesterpolyol aromatique (b3) est obtenu par estérification d'acides dicarboxyliques ou de leurs dérivés, contenant de l'acide téréphtalique ou des dérivés de l'acide téréphtalique et des dialcools et présente une fonctionnalité supérieure à 2 et un indice d'OH de 100 à 800 mg de KOH/g.

11. Procédé selon l'une quelconque des revendications 1 à 10, **caractérisé en ce que** le composant (B) ne contient, outre le polyétherpolyol (b1), le condensat de Mannich aromatique (b2) et le polyesterpolyol aromatique (b3), pas d'autres composés présentant au moins deux atomes d'hydrogène réactifs avec les groupes isocyanate.

12. Procédé selon l'une quelconque des revendications 1 à 11, **caractérisé en ce que** la proportion d'agent ignifuge (C) est de 25% en poids à 35% en poids , par rapport au poids total des composants (B) à (F).

13. Procédé selon l'une quelconque des revendications 1 à 12, **caractérisé en ce que** le catalyseur (E) est un mélange catalytique, contenant une amine tertiaire et un carboxylate métallique ou d'ammonium.

14. Procédé selon l'une quelconque des revendications 1 à 13, **caractérisé en ce que** la mousse dure de polyuréthane est produite en continu selon le procédé à double bande.

15. Mousse dure de polyuréthane pouvant être obtenue selon un procédé selon l'une quelconque des revendications 1 à 14.
